Europäisches Patentamt

European Patent Office

Office européen des brevets

(11) Publication number: **0 465 157 B1**

# EUROPEAN PATENT SPECIFICATION

(45) Date of publication of patent specification: **19.07.95**    (51) Int. Cl.⁶: **C10G 11/18**, B01J 8/18

(21) Application number: **91305878.0**

(22) Date of filing: **28.06.91**

(54) Fluidised coking apparatus and control thereof.

(30) Priority: **03.07.90 US 548474**

(43) Date of publication of application:
**08.01.92 Bulletin 92/02**

(45) Publication of the grant of the patent:
**19.07.95 Bulletin 95/29**

(84) Designated Contracting States:
**BE DE FR GB IT NL**

(56) References cited:
**EP-A- 0 208 609        EP-A- 0 227 864**
**EP-A- 0 444 860        US-A- 4 434 049**
**US-A- 4 575 414        US-A- 4 793 913**

(73) Proprietor: **EXXON RESEARCH AND ENGINEERING COMPANY**
**P.O.Box 390,**
**180 Park Avenue**
**Florham Park,**
**New Jersey 07932-0390 (US)**

(72) Inventor: **Sabottke, Craig Young**
**36, Skyline Drive**
**Morristown, NJ 07960 (US)**

(74) Representative: **Somers, Harold Arnold et al**
**ESSO Engineering (Europe) Ltd.**
**Patents & Licences**
**Mailpoint 72**
**Esso House**
**Ermyn Way**
**Leatherhead,**
**Surrey KT22 8XE (GB)**

**Description**

The present invention is directed to a fluidized coking apparatus and method of control thereof.

In accordance with one aspect, the invention provides an apparatus for the fluidized coking of a hydrocarbon and/or hydrocarbonaceous feed, comprising a fluidized coking reactor, one or more feed injectors connected to a wall of the coking reactor, at least one of which feed injectors is capable of adjusting the atomization of the feed while installed in the coking reactor wall, and further comprising means for monitoring the pressure drop (dP) across at least one of the injectors (or a part thereof), means operable to derive a signal representative of dP, and controller means responsive to said signal to adjust, for at least one selected injector, a feed atomization parameter selected from dP, fluid flow-rate through the selected injector(s), fluid mass flow-rate per unit flow area in the selected injector(s) or part(s) thereof, fluid volume flow-rate per unit flow area in the selected injector(s) or part(s) thereof, vapor-phase density in the selected injector(s) or part(s) thereof, or a combination of at least two of the foregoing parameters, to provide a feed atomization parameter within a range corresponding with a desired degree of atomization of feed passing through at least the selected injector(s).

In accordance with another aspect, the invention provides a method of controlling an apparatus for fluidized coking of a hydrocarbon and/or hydrocarbonaceous feed, the apparatus comprising a fluidized coking reaction zone and at least one feed injector for introducing feed into the reaction zone in the form of a spray of atomized droplets, and wherein the injector(s) is/are adjustable to vary the feed droplet size and/or the spray pattern of feed entering the reaction zone; the method comprising monitoring the pressure drop (dP) across at least one of said injectors (or a part thereof), deriving a signal representative of dP, and employing said signal to adjust, for at least one selected injector, a feed atomization parameter selected from dP, fluid flow-rate through the selected injector(s), fluid mass flow-rate per unit flow area in the selected injector(s) or part(s) thereof, fluid volume flow-rate per unit flow area in the selected injector(s) or part(s) thereof, vapor-phase density in the selected injector(s) or part(s) thereof, or a combination of at least two of the foregoing parameters, until the feed atomization parameter falls within a range corresponding with a desired degree of atomization of feed passing through at least the selected injector(s).

In this description, the term "atomization," with respect to the effluent from a feed injector, is meant to encompass the following atomization characteristics: the average or mean feed droplet size, droplet size distribution, and spray pattern. Spray pattern refers to spray angles and shape, for example, cone, fan, etc.

In general, a degree of feed atomization characterized by a smaller average droplet size, narrow droplet size distribution, and well dispersed spray pattern will result in less coke and less dry gas, thereby tending to maximize liquid yields. To maximize high value products such as naphtha and light distillates, atomization of the feed into relatively fine droplets may be selected to match the size and distribution of the solid particles employed in the reaction zone. On the other hand, a larger relative average droplet size and wide distribution, including a portion of droplets significantly larger in size than average, and a spray pattern not well dispersed, can result in a significant increase in coke formation. The selected degree of atomization will depend on the process objectives. For example, in order to maximize LPG and naphtha, a fine droplet size may not be ideal. It is believed that droplet size and distribution are dominant factors in achieving yield objectives. Data suggests that two different spray patterns may have drastically different effects on yields.

An oil-only feed may be "pressure atomized" and/or sprayed into the reactor. However, in the preferred operating mode, a lower molecular weight media is injected into the oil feed. Suitable media include hydrogen, steam, nitrogen, low molecular wt. reactor off-gas, and $C_6^-$ hydrocarbons. Most preferably, a steam/oil mixture is used as the feed stream to the reactor. In a preferred embodiment, this steam/oil mixture is passed through a variable throat feed injector nozzle. The ratio of steam/oil can be adjusted during operations based on changes in oil feed type and properties. The amount of steam in the mixture influences the density of the mixture and will therefore have an impact on atomization. General commercial practice, suitable with the present process, is to use about 0.50 wt% steam for light feed types and about 3.0 to 5.0 wt% steam for heavy, more viscous feed types.

A good indicator or measure of the state of atomization of the feed handled is the pressure drop $\Delta P$ across the nozzle of the feed injector. Alternatively, a parameter related to nozzle pressure drop can be used as a measure of atomization. For example, pressure drop is directly related to nozzle cross-sectional area in the preferred feed injectors of the present invention. The nozzle resistance coefficient, defined below in the examples, is a good measure of atomization. Data relating nozzle droplet size, droplet size distribution and spray pattern to nozzle resistance coefficient or $\Delta P$ can be obtained experimentally, as detailed below in the examples.

Correlations can also serve as a basis for making estimates of the performance of a particular variable throat feed injector design. Nozzle geometry can effect spray pattern, liquid droplet size and droplet size distribution, and is therefore reflected in the nozzle resistance coefficient.

As mentioned earlier, the desired degree of atomization may depend on the process or operating objectives. For example, atomization of the feed into a conversion and cracking zone can be selected to compensate for changing product yield and/or quality objectives in a multivariable constraint control or LP control or non-linear LP control environment. An example of this would be naphtha product liquid yield and research octane quality. As product values change in the marketplace, the reactor yields can be adjusted to optimize the economic benefit from the fluidized hydrocarbon conversion and cracking process on a refinery's operation. This is extremely important at refineries where on-stream blending is conducted.

The degree of atomization may be used as a control variable, changing in real time. For example, both yields and temperatures can be varied by varying the degree of atomization. The use of variable throat feed injectors to control yield and selectivity in a fluid catalytic cracking unit (FCCU) is described in EP-A-444 859 (which derives from U.S. Patent Application Serial Nos. 485,701 and 486,046). The use of a variable throat feed injectors to control the carbon balance in a FCCU is also described in EP-A-444 859. The use of variable throat feed injectors to control FCCU feed rate is described in EP-A-444 860 (which derives from U. S. Patent Application Serial No. 486,035.

The nozzle flow area and atomization can be adjusted to compensate for changing upstream flow rates or changing upstream chemical or physical properties. The atomization can also be adjusted to compensate for normal equipment wear, or to compensate for nozzle coking/plugging, which can cause poor atomization and adverse yield and quality shifts.

The preferred means of controlling the feed atomization is by monitoring the injector nozzle pressure drop $\Delta P$, for example, by means of a pressure transducer or controller (PdRC), and sending a signal based thereon to an actuator associated with a variable (movable) throat feed injector. Suitably, a PdRC can be operated in a simple single control loop mode holding a target nozzle pressure drop. Alternatively, the PdRC can be combined in a more complex control configuration.

In a simple single control loop mode, a PdRC target pressure drop is set to achieve a desired feed atomization. The unit operator would monitor, in an "open loop" control mode, the effect that various PdRC set points have on the reactor process yields and qualities. The PdRC set point would be selected based on plant response trends to optimize the feed atomization (including spray pattern, droplet size and droplet size distribution).

Field calibration curves can be constructed for each variable (movable) throat feed injector to define the relationship between nozzle $\Delta P$ and nozzle flow area. Ideally, the same relationship should be determined for each nozzle; however, in actual practice, unit specific piping layout may result in some slight difference among various nozzles. Based on field data, one of the variable (movable) throat nozzles can be selected as the reference sensing nozzle. The PdRC will monitor the pressure drop of this nozzle and send control movement signals to the application program. Based on the field calibration data for each individual variable (movable) throat feed injector and the PdRC signal, the application program will send a signal to the individual actuators/positioners to change the nozzle flow area as required. To avoid unnecessary actuator hunting, some dead band provision may be provided. Also, a hierarchy may be provided in the application program so that individual nozzles are stroked in a sequential and specific geometric pattern. Two opposing nozzles may be stroked as a pair.

Application of variable throat feed injectors to a fluidized hydrocarbon conversion and cracking process allows for new control configurations, for example, wherein total feed flow control to one or more feed injectors is cascaded to the feed injector nozzle. Spare control valve $\Delta P$ and feed pump $\Delta P$ available in the feed circuit is transferred to the feed injector nozzle to optimize nozzle $\Delta P$ and improve atomization and/or spray pattern.

A process control scheme may involve a single level or stage of feed injectors, or multiple levels (multistage) feed injectors, for example, uniformly distributed around the circumference of an reactor vessel and/or riser. For a typical reactor configuration, the total feed, comprising preheated fresh feed plus cracked recycle stocks from a downstream product fractionator, is typically combined upstream of the feed injector nozzles. This total feed stream is typically combined with feed injection steam and sent to the feed injector nozzles.

It is not uncommon to practice staged and/or segregated contacting of feeds to an reactor. For example, a fluid coker reactor having several levels of feed injectors has the capability to practice segregated feed contacting. As an example of various embodiments to which the present process is applicable, a particular reactor, for example having levels Nos. 1, 2, and 3 on a vertical axis of its reactor vessel and/or riser, may have the following processing options:

    a. Total feed to level No. 1 (Total feed can be comprised of any or all of the following: virgin or processed or pretreated vacuum residuum, imported vacuum residuum, imported atmospheric resid,

EP 0 465 157 B1

recycle streams from the reactor product fractionator, or recycled streams from other refinery process units).

b. Virgin or processed or pretreated vacuum residuum (VR) to level No. 1 and reactor product recycle streams to level No. 2.

c. Total feed to level No. 2 (reduced reactor residence time mode).

d. Virgin or processed or pretreated vacuum residuum (VR) to level No. 1, HKCO (heavy coker cycle oil) recycle to level No. 2, and bottoms product recycle to level No. 3.

e. Virgin or processed or pretreated vacuum residuum (VR) to level No. 2 and reactor product recycle streams to level No. 3.

f. Virgin or processed or pretreated vacuum residuum (VR) feed and reactor recycle streams to level No. 1 and imported (resid) feed to level No. 2.

g. Virgin or processed or pretreated vacuum residuum (VR) to level No. 1 and reactor recycle streams plus imported (resid) feed to level No. 2.

h. Virgin or processed or pretreated vacuum residuum (VR) to level No. 1, reactor recycle streams to level No. 2 and imported (resid) feed to level No. 3.

i. Virgin or processed or pretreated vacuum residuum (VR) and recycle streams to level No. 2 and imported (resid) feed to level No. 3.

In one embodiment of a staged/segregated reactor system, the best quality feed is reacted with the best quality, most active solid particles first. In subsequent stages, preferably lower quality feeds are introduced into the reactor system.

In a single stage transferline reaction system, the preferred location of a level or ring of variable throat feed injector nozzles is at the inlet to the reactor riser (sometimes also called the transferline reactor). Suitably, a number of nozzles are uniformly distributed around the perimeter of the reactor riser to insure good solid particle/oil contacting and mixing.

In a multistage reactor system, wherein an existing unit is revamped in order to practice the present process, a preferred operating mode is as follows. Reactor fresh feed and reactor product recycle streams would be segregated. Because of the fluid property and chemistry differences between recycle streams and fresh feed streams, use of variable (movable) throat feed injectors on the recycle streams provides additional process flexibility. Recycle stream liquid droplet size, droplet size distribution and/or spray pattern can be optimized by variable (movable) throat feed injector nozzles. Because of feed segregation, the recycle streams can be atomized into the reactor system at the conditions that are the most optimal for these feed components. It is feasible that the atomization of fresh feed will be optimized at a different state of atomization compared to the atomization of the reactor product recycle streams into the reactor, because of the different hydrocarbon chemistries involved. The basis for these different optimizations will be unit specific based on operating objectives and prevailing economics.

As an alternative case, segregated feeds can be processed at a given level of feed injectors using separate nozzles.

Variable throat feed injectors which may be employed in the present invention can be constructed by appropriate modification of a conventional fixed throat injector, for example, by adding a movable throat insert as detailed below. Types of fixed throat nozzle designs are numerous and include, but not limited to, converging-diverging, converging, converging-diverging fan, and spiral type. Extension of this invention to other nozzle geometries and other fixed throat nozzle designs will be appreciated by those skilled in the art. Any feed injector system which is capable of varying the feed atomization in a controllable manner can be employed in the process of the present invention.

The process and apparatus of the invention will be more dearly understood upon reference to the detailed discussion below in conjunction with the drawings, wherein:

FIG. 1 schematically illustrates one embodiment of a fluid coking (with gasification) unit, to which the present invention is applicable;

FIG 2A is a flow diagram of a hydrocarbon conversion and cracking riser reactor comprising a feed flow control system according to the present invention;

FIG. 2B is a flow diagram of a hydrocarbon conversion and cracking fluid bed reactor comprising a feed flow control system according to the present invention;

FIG. 3 is a schematic diagram of a variable throat reactor feed injector assembly according to one aspect of the present invention;

FIG. 4 is a schematic diagram, in greater detail, of the nozzle atomization adjustment assembly portion of the feed injector in FIG. 3;

FIG. 5 is a front view of the premixer portion of the nozzle atomization adjustment assembly of FIG. 4;

4

FIG. 6 shows in greater detail a nozzle atomization adjustment assembly while positioned within a variable throat converging fan nozzle geometry;

FIG. 7 is a typical graph of percent stroke versus flow area for the nozzle portion of a variable throat converging fan feed injector of the type depicted in FIG. 3;

FIG. 8 is a schematic diagram of the feed injector depicted in FIG. 2A and FIG. 2B, shown attached to a wall of either the riser portion or the reactor fluid bed portion of a hydrocarbon conversion and cracking reactor;

FIG. 9 shows a graph of a typical feed injector droplet size distribution and droplet velocity distribution;

FIG. 10 (parts (A and B) is a flow chart illustrating a computer application program for carrying out a preferred embodiment of the invention according to Example 2 below.

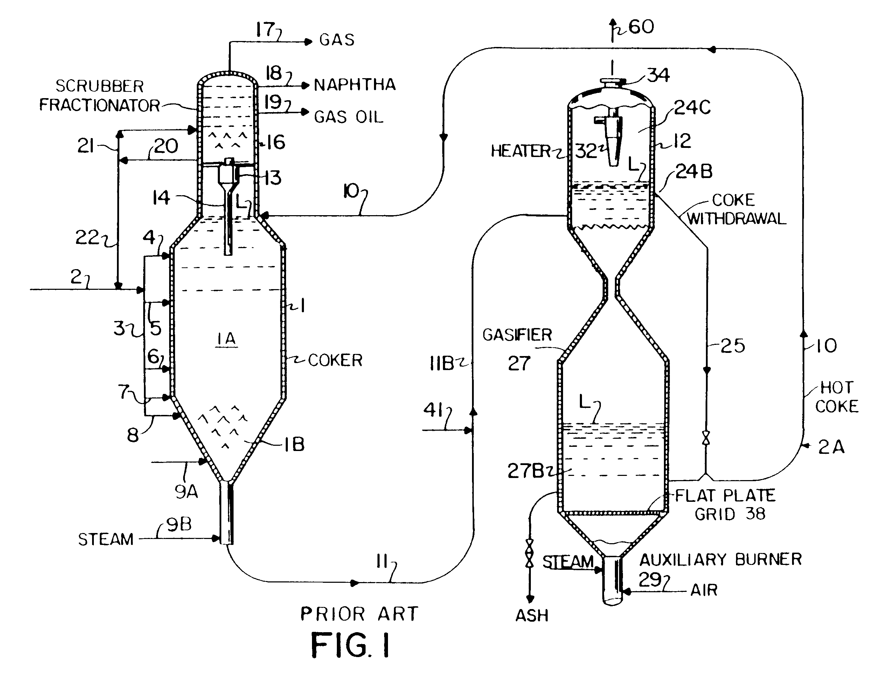

Referring now to FIG. 1, there is shown a vertically arranged cylindrical reactor 1 containing a reaction zone 1A comprising a fluidized bed of solid coke ore particles, in which bed a hydrocarbon feedstock introduced at lines 2-8 is undergoing conversion and cracking. Hydrocarbon feedstocks that can be suitably employed in a fluid coking with gasification process include heavy hydrocarbonaceous oils; heavy and reduced petroleum crude oils; petroleum atmospheric distillation bottoms, petroleum vacuum distillation bottoms; pitch; asphalt, bitumens, and other heavy hydrocarbon residues; tar-sand oils; shale oils; liquid products derived from coal liquification processes, including coal liquification bottoms, coal; coal slurries and mixtures therof; and the like. Such feedstocks may be employed singly, separately in parallel reaction zones, or in any desired combination. Hydrocarbon gas and vapors passing through the reactor 1 maintain the solid particles in a turbulent fluidized condition having the appearance of a boiling liquid.

In general, any commercial hydrocarbon conversion catalyst of a suitible powder form, designed for high thermal stability could be suitably employed in the present invention as an enhancement to the fundamental in situ developed solid particles which form the basis of the fluid coking and fluid coking with gasification processes used as a reference process to illustrate this invention. Such catalysts include those containing silica and/or alumina such as well known zeolites, as well as others.

In reaction zone 1A, the solid particles becomes spent during contact with the hydrocarbon feedstock due to the deposition of coke thereon. Thus, the terms "spent" or "coke-contaminated" solid particles as used herein generally refers to solid particles and/or catalyst particles which have passed through a reaction zone and which contains a sufficient quantity of coke thereon to cause significant activity loss, thereby requiring coke burn off and/or gasification to restore the process efficiency and performance of the solid particles. Typically, the coke contents on the spent solid particles which must be burned off or gasified vary from about 0.50 to about 25.0 wt%.

Prior to actual regeneration by either burn-off or gasification, the spent solid particles are usually passed from the reaction zone into a stripping zone 1B, below a fluidized bed level indicated at L, and contacted therein with a stripping gas, which is introduced into the lower portion of zone 1B via line 9A and 9B. The stripping gas, which is usually introduced at a pressure of from about 10 to about 150 psig, serves to remove most of the volatile hydrocarbons from the spent solid particles. A preferred stripping gas is steam, although nitrogen, other inert gases or flue gas may be employed. Normally, the stripping zone is maintained at essentially the same temperature as the reaction zone, i.e., from about 455 to 593 °C (850 °F to about 1100 °F).

Stripped spent solid particles from which most of the volatile hydrocarbons have been stripped therefrom is then passed from the bottom of stripping zone 1B, through a spent solid particle transfer line, such as J-bend 11 and interconnected vertical riser 11B, which extends into the lower portion of a heater 12.

Riser 11B is shown entering the heater 12 off-center to avoid interference with the heating gas/air mixture from section 27 of the gasifier zone. In the embodiment shown, only one riser 11B is utilized. It is, however, within the contemplation of the subject invention that a plurality of risers may be used.

Air may be added to riser 11B through line 41 in an amount sufficient to reduce the density of the solid particles flowing therein, thus causing the solid particles to flow upward into the heater 12 by simple hydraulic balance.

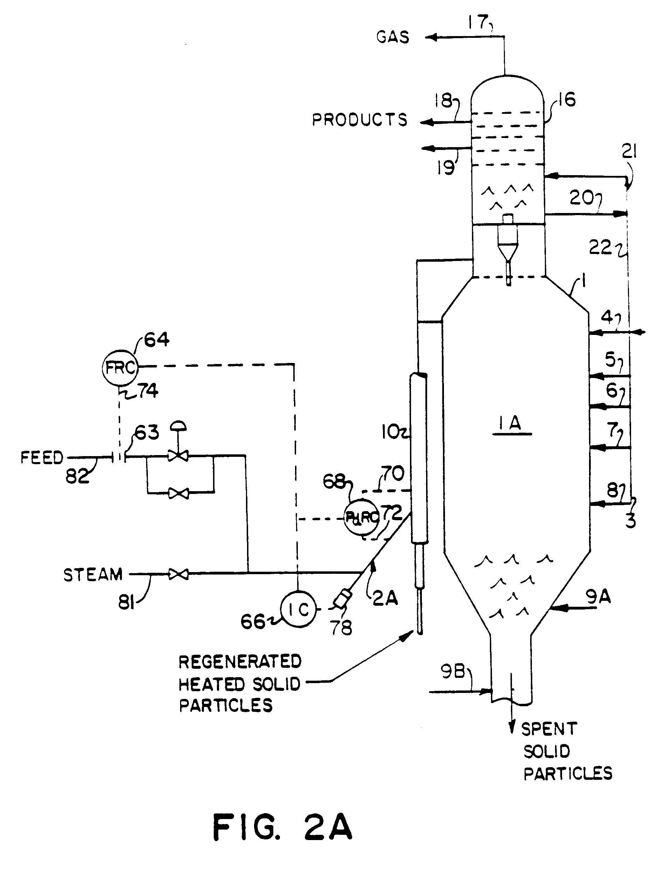

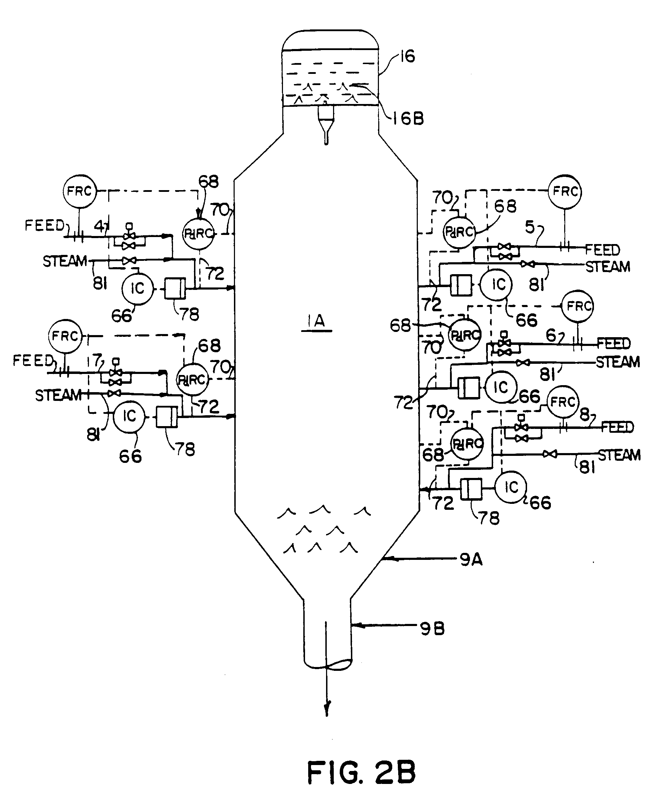

In the particular configuration shown in FIG. 1, the heater/regenerator 12 is a separate vessel (arranged at approximately the same level as the reactor product scrubber fractionator 16 containing a dense phase fluidized bed 24B of solid particles having a level indicated at L, which is undergoing regeneration to burn off coke deposits formed in the reaction zone during the conversion and cracking reaction, above which is a dilute phase 24C. An oxygen-containing gas enters the lower portion of gasifier regeneration zone 27 via line 29 and passes up through a grid 38 and the dense phase fluidized solid particle bed 27B, maintaining said bed in a turbulent fluidized condition similar to that present in reaction zone 1A. As will be discussed in more detail with respect to FIG. 2 hereinbelow, the present invention resides in an improved system of process control involving the introduction of feed into a conversion and cracking zone which, in this particular design, is located within the coker reactor 1.

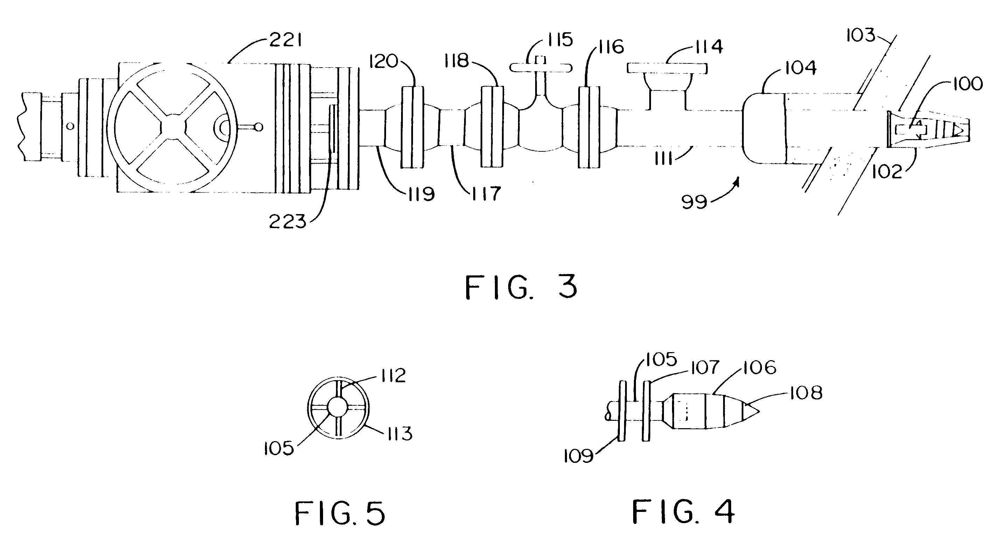

Regenerated solid particles from the dense phase fluid bed 24B in the heater/regeneration zone 12 flows downward through standpipe 2B and passes through a J-bend into the reaction zone 1 by way of the transfer line 10 which joins the J-bend at the level of the alternate oil injection line 2A above the J-bend. By regenerated solid particle is meant solid particles leaving the various regeneration, heater and gasification zones which has contacted an oxygen-containing gas causing at least a portion, preferably a substantial portion, of the coke present on the solid particles to be removed, where said coke has been derived from the hydrocarbon feed to the process. The hydrocarbon feedstock for the conversion and cracking process is injected into the reactor 1 through lines 2 - 8 via special feed injectors, to be described in detail below with reference to FIG. 3, to form an oil and solid particle mixture which is passed into the reactor 1 within the reaction zone 1A. Product vapors containing entrained solid particles pass overhead from the reactor 1 into a gas-solid separation means 13 wherein the entrained solid particles are separated therefrom and returned through diplegs 14 leading back into the reactor zone 1A. The product vapors, in lines 17-19, are then conveyed through a scrubber fractionator section 16 into the product recovery system. A liquid draw-off in line 20 provides, in line 22, recycle of coker fractionator bottoms and, in line 21, quench for super-heated vapors.

In regenerator/heater 12, gases formed during regeneration/gasification of the spent solid particles can pass from the dense phase fluid bed 24B into the dilute phase 24C along with entrained solid particles. The solid particles are separated from the gas by a suitable gas-solid separation means 32 and returned to the dense phase fluid bed 24B. The substantially solid particle-free gas then passes into a plenum chamber 34 prior to discharge from the regenerator/heater 12 into down stream gas handling equipment through line 60.

A better understanding of how the present invention may be applied to control the flow of feed to the fluid coking with gasification unit may be obtained by reference to FIG. 2A which shows the reaction portion of the fluid coking and gasification unit in isolation from the heater and gasifier portion and in conjunction with certain process control instrumentation and signals. The control system and equipment are in itself conventional, as will be readily appreciated by those skilled in the art and, therefore, are shown only schematically. The numbers in FIG. 2A which are less than or equal to 52 are the same as the numbers in FIG. 1 and correspond to the same parts.

Although schematically showing the alternate feed injectors by a single line 2A in FIG. 2A, this embodiment actually employs a plurality of feed injectors. In three dimensions, there are typically three or more (3 to 20) feed injectors horizontally spaced, on the same level, around a circumference of the riser. For flow control purposes, a flow controller 64 can be cascaded to a feed injector controller 66. Alternatively, the flow controller 64 can be cascaded to the pressure controller 68, which in turn is cascaded to the same feed injector controller 66 to maintain a target level of atomization.

As evident in FIG. 2A and the above detailed description of the invention, the pressure controller 68, measures the pressure drop across a portion of the feed injector, suitably the difference between the pressure, as measured by line 70, within the riser 46 just outside the nozzle tip of the feed injector, and the pressure, as measured by line 72, at a point within the injector just prior to the nozzle throat section that is varied, as explained below with respect to FIG. 3. The pressure controller includes a comparator for measuring the difference with a target set point, typically 690 to 1035 kPa (100 to 150 psi).

A flow monitoring device 63 measures in real time, the flow rate of feed in the conduit 82 leading to the feed injectors, the signal based thereon being sent via line 74. An acoustic measuring device can be employed for this purpose. When alternatively or additionally monitoring the properties of the feed, conventional analytical instrumentation can be employed. For example, the API gravity or refractive index may be measured. Feed composition and/or properties may be measured with infrared, ultraviolet, or mass spectroscopy. High pressure liquid chromatography may be employed to separate components of the feed. The controller 64 suitably includes a comparator to compare the measured flow rate, typically in units of kilobarrels per day (kB/D), to a set point. A signal based on the calculated flow rate or difference from set point can, as mentioned above, be cascaded either directly to the injector controller 66 or in a layered hierarchy to the pressure controller 68 which in turn is cascaded to the injector controller 66.

The injector controller 66 is used to preferably individually adjust the pressure drop across the feed injectors. In each case an actuator 78 is employed to vary the position of suitable atomization adjusting means (not shown). In this embodiment, a movable member is employed to vary the cross-sectional flow area of a throat section of the feed injector and, thereby, the pressure drop. Steam via line 81 is introduced into the feed injector for admixture with the feed oil in line 82 to produce a steam-oil mixture in line 80.

Additional clarification of how the present invention may be applied to control the flow of feed to the fluid coking with gasification unit may be obtained by reference to FIG. 2B, which shows the reaction portion of the fluid coking and gasification unit in isolation from the heater and gasifier portion and in conjunction with certain process control instrumentation and signals. The control system and equipment are in itself conventional, as will be readily appreciated by those skilled in the art and, therefore, are shown only schematically. The numbers in FIG. 2B which are less than or equal to 52 are the same as the numbers in FIG. 1 and correspond to the same parts.

Although schematically showing the primary feed injectors at each level by a single lines 4, 5, 6, 7,and 8 in FIG. 2B, this embodiment actually employs a plurality of feed injectors at each level. In three dimensions, there are typically three or more (3 to 20) feed injectors horizontally spaced, on the same level, around a circumference of the coker reactor vessel. For flow control purposes, a flow controller 64 can be cascaded to a feed injector controller 66. Alternatively, the flow controller 64 can be cascaded to the differential pressure controller 68, which in turn is cascaded to the same feed injector controller 66 to maintain a target level of atomization.

As evident in FIG. 2B and the above detailed description of the invention, the differential pressure controller 68, measures the pressure drop across a portion of the feed injector, suitably the difference between the pressure, as measured by line 70, within the reactor just outside the nozzle tip of the feed injector, and the pressure, as measured by line 72, at a point within the injector just prior to the nozzle throat section that is varied, as explained below with respect to FIG. 3. The pressure controller includes a comparator for measuring the difference with a target set point, typically 690 to 1035 kPa (100 to 150 psi).

A flow monitoring device 63 measures in real time, the flow rate of feed in the conduit leading to the feed injectors, the signal based thereon being sent via line 74. An acoustic measuring device can be employed for this purpose. When alternatively or additionally monitoring the properties of the feed, conventional analytical instrumentation can be employed. For example, the API gravity or refractive index may be measured. Feed composition and/or properties may be measured with infrared, ultraviolet, or mass spectroscopy. High pressure liquid chromatography may be employed to separate components of the feed. The controller 64 suitably includes a comparator to compare the measured flow rate, typically in units of kilobarrels per day (kB/D), to a set point. A signal based on the calculated flow rate or difference from set point can, as mentioned above, be cascaded either directly to the injector controller 66 or in a layered hierarchy to the pressure controller 68 which in turn is cascaded to the injector controller 66.

The injector controller 66 is used to preferably individually adjust the pressure drop across the feed injectors. In each case an actuator 78 is employed to vary the position of suitable atomization adjusting means (not shown). In this embodiment, a movable member is employed to vary the cross-sectional flow area of a throat section of the feed injector and, thereby, the pressure drop. Steam via line 81 is introduced into the feed injector for admixture with the feed oil.

Referring to FIG. 3, a typical embodiment of an reactor feed injector according to the present invention is shown, generally designated 99. This injector comprises at one end a nozzle tip 102. A fixed throat nozzle geometry is shown, it being understood that various nozzle geometries are quite possible.

The feed injector is connected to wall 103 of the reactor by what is termed a "thermal sleeve" arrangement 104. As evident, the feed injector assembly is an integral part of the reactor system. Other mechanical attachment arrangements will be familiar to those skilled in the art.

A feed injector nozzle atomization adjustment assembly, generally designated 100, comprising a shaft 105 and a lead portion or adjusting means 106, is shown in greater detail in FIG. 4. An end tip portion 108 of this adjusting means 106 is designed to function within the converging fan tip nozzle 102. Modulation and/or positioning of the end tip portion 108 within the nozzle tip 102 will change the flow area and influence the atomization achieved by the nozzle tip 102. A preferred addition to the basic design of the variable throat feed injector is to include premixers 107 and 109 in close proximity to the nozzle insert tip 106. The premixers enhance the atomization, particularly the spray pattern, achieved by the variable throat feed injector. The embodiment of a reactor feed injector assembly shown in FIG. 3 represents a minimum stroke design.

The two premixers 107 and 109 are staggered on a 45° offset and act as static mixers, slug/bubble breakers, fluid vibration dampeners and radial flow enhancers. From a fluid flow perspective, they impart a radial or swirling moment to the otherwise axial flow. This enhances the atomization achieved by the nozzle. If the flow regime of the fluid in the process pipe leading to the feed injector should happen to fall into an unattractive regime, such as slug flow, the premixers will serve as slug/bubble breakers and help supply a more homogeneous fluid phase mixture immediately upstream of the variable throat nozzle. This will also help enhance the atomization achieved by the nozzle. The premixers 107 and 109 also assist in alignment of the shaft 105 and atomization adjusting means 106 within the nozzle 102 and process piping 111. The details of a premixer are shown in cross-section in FIG. 5, wherein it is seen that spokes 112 radially emanate from shaft 105 and join a circular rim 113.

In the particular injector assembly configuration shown in FIG. 3, a mixture of steam and oil is introduced upstream of the nozzle tip 102 through a steam oil fluid inlet 114. Because of oil partial pressure effects in the reactor, it is generally preferred to use an atomization enhancement medium such as steam to help assist in oil atomization, although other gases could be used. However, the variable throat feed injector could operate with oil-only feed, in a mode to pressure atomize/spray oil without steam being used. The atomization enhancement medium could alternatively be introduced into the reactor through separate connections. However, in a typical operating method for this variable throat feed injector, a steam/oil mixture is formed upstream of the nozzle by flow controlling the steam/oil ratio. The steam/oil ratio will be set based on oil properties and other process considerations. The oil phase may be partially vaporized as a result of preheating. Thus, the fluid mixture being supplied to the feed injector assembly will usually consist of a gas phase, a liquid oil phase and possibly a vapor oil phase.

To conserve on system size, an isolation valve 115 between flanges 116 and 118 may be used as part of the feed injector assembly to allow for onstream maintenance of the system. This isolation valve is usually a gate valve, although other valve types such as a ball valve may be used. The atomization adjusting means assembly for the nozzle can be retracted, the isolation valve closed and the assembly removed as required for on-stream maintenance. For example, if feed type and chemistry should cause undesirable coking or partial plugging of the nozzle inside, the nozzle insert shaft assembly can be removed and subjected to onstream cleaning.

A nozzle maintenance receiver pipe section 117, suitably a spool section of piping, is provided between the isolation valve 115 and flange 120. A spool section 119 holding a conventional packing gland allows for modulation of a throat insert employed as an atomization adjusting means. A low leak design is preferred, although various packing gland designs are acceptable. This spool section also allows for on-stream cleaning and maintenance of the nozzle atomization adjustment assembly. It will be appreciated that simplified injector assembly designs are optional, if on-stream maintenance or cleaning is not a concern.

A suitable mechanical positioning means is exemplified by actuator assembly 221, which provides for the mechanical movement, modulation and stroke control of the nozzle atomization adjustment assembly and shaft. Control of the relative position of the nozzle atomization adjustment assembly relative to the nozzle tip 102 influences the atomization and/or spray pattern from the nozzle. In a typical design, a pneumatic actuator with a manual override feature (hand wheel operator) is employed. Other actuator configurations are also acceptable, including a hydraulic actuator or motor-driven actuator. The actuator is capable of receiving control instructions from other instruments and controllers and moving the position of the atomization adjusting means based on these control instructions.

Generally, pneumatic actuators will be preferred over hydraulic actuators because of relative cost, and pneumatic or hydraulic actuators preferred over other types because of reliability. However, unit specific factors may influence actuator selection.

A shaft coupling 223, a bolted flange type, is shown to mate the shaft of the adjustment assembly 100 to the actuator assembly 221. Various shaft coupling designs are acceptable.

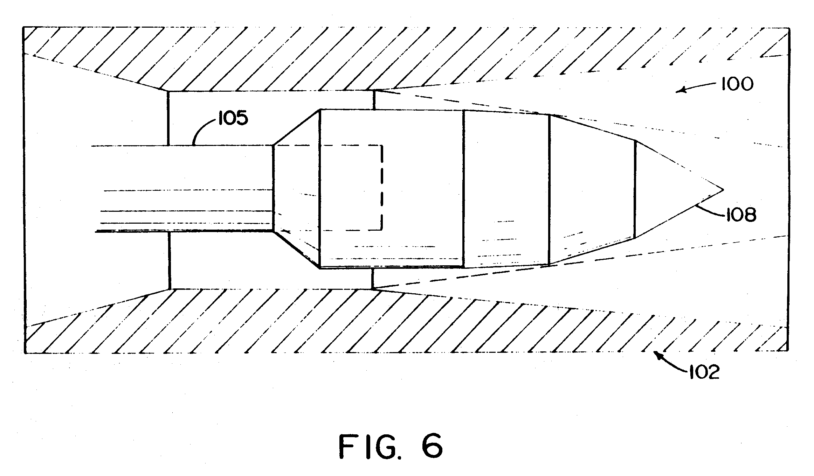

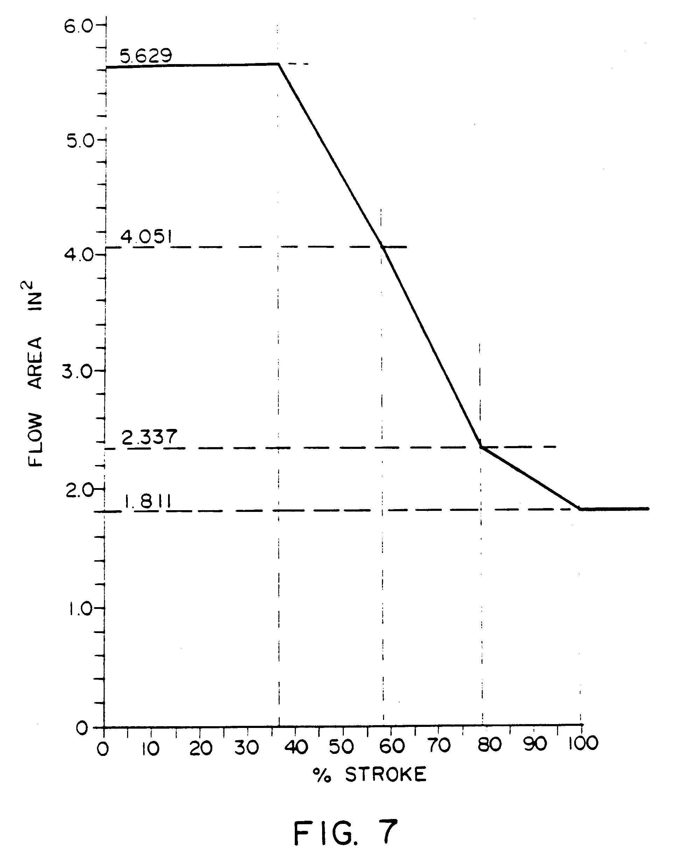

FIG. 6 shows in greater detail nozzle adjustment assembly 100 (without premixers), positioned at the distal end of shaft 105 and inserted into fan nozzle 102. A tip portion 108 of the nozzle adjustment adjusting means 106 is shown at its estimated maximum insertion point. FIG. 7 shows a graph, for a typical variable throat nozzle, wherein the flow area is plotted against the percent stroke of the shaft used to move the nozzle atomization adjustment assembly by its actuator.

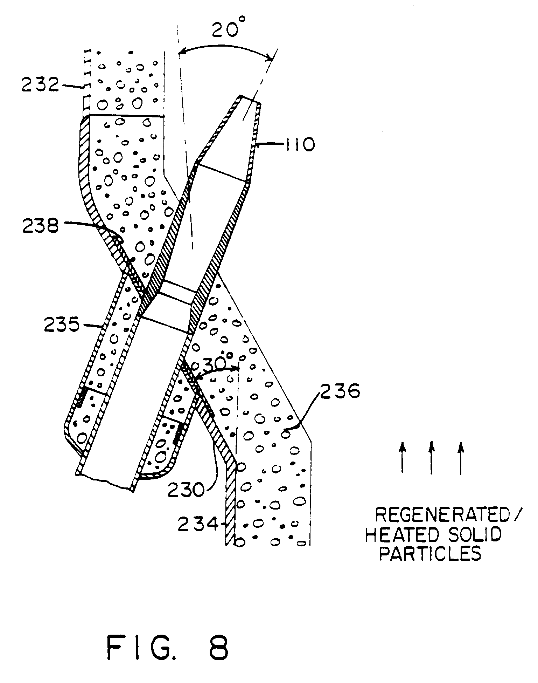

FIG. 8 shows in detail an installation of a typical feed injector attached to the wall of a reactor riser of the reactor. A similar type of installation is used for the reactor fluid bed portion of the reactor. In the former case, the fluidized regenerated solid particles will be rising, as shown in FIG. 8, and in the latter case, the particles will be descending, and the shapes of the wall may differ, as will be appreciated by those skilled in the art. The nozzle tip portion 110 is shown positioned at a typical angle of 20 degrees to the vertical. The feed injector is shown in cross-section transversing, in the FIG. 8 embodiment, a conical segment shaped wall 230 section which itself is at a 30 degree angle from the vertical, between an upper relatively larger diameter cylindrical vertical wall portion 232 and a lower relatively smaller diameter cylindrical vertical wall portion 234 of the riser. Different attachment angles and orientation angles may be used depending on the specific unit and type of injector. As evident to those skilled in the art, the installation of the injector is conventional and utilizes a pipe cap 235 and castable lining 236 beneath the metal walls of the reactor apparatus. A kaowool pad plate 238 surrounds the circumference of the feed injector where it pierces the riser wall. Welding at appropriate edges renders the connection airtight. Other mechanical attachment arrangements, known to those skilled in the art, are suitable.

Example 1

This example illustrates tests for collecting data on atomization associated with various nozzle configurations used for feed injection in a fluid catalytic cracking process. A similar experimental procedure could be used to generate information specific to a fluid coking (with gasification) process.

Fine droplets and a wide angle spray are expected to provide more rapid and uniform catalyst/oil mixing in the riser and improve the FCCU operation over the existing nozzles. The approach taken in these tests was to conduct cold model tests to examine the effects of liquid viscosity and vapor/liquid flow rates on droplet size, spray dispersion angle, and nozzle pressure drop. Droplet sizes of the sprays were measured with a Laser Doppler Anemometer (LDA). Nitrogen and water/glycerine solutions were used to simulate steam-oil feed. Correlations for predicting the mean droplet size and the pressure drop for a nozzle was developed for use in designing and controlling feed injectors according to the present invention.

Although pressure nozzles, spinning disks and pneumatic nozzles are three basic types of atomizers used in industry, these tests were confined to an investigation of pneumatic nozzles in which a compressible fluid such as air or steam of high velocity is used to disintegrate a liquid jet. The most widely quoted work in pneumatic atomization is a drop-wise correlation by Nukiyama and Tanasawa (Nukiyama and Tanasawa, Trans. Soc. Mech. Engrg., Japan, 6122, 57-58, 1940). This correlation, however, was derived from test data with gas to liquid mass flow ratios on the order of ten compared to the mass flow ratio of about 0.01 used in these tests. For the present conditions, the correlation of Kim and Marshall (K. Y. Kim and W. R. Marshall, Jr., "Drop-size Distribution from Pneumatic Atomizers", AIChE Journal, pp. 575-584, Vol. 17, No. 3, May, 1971) is more suitable and therefore was used to compare the test measurements. Kim and Marshall covered the range of gas-liquid relative velocity from 76 m/s (250 ft/sec) to sonic velocity, viscosity 1 to 50 x $10^{-3}$ Pa.s (1 to 50 cP), and gas-liquid mass ratio 0.06 to 40. The operating ranges of this test program were relative velocity of 61 to 213 m/s (200 to 700 ft/sec), viscosity 1.3 to 2.6 x $10^{-3}$ Pa.s (1.3 to 2.6 cP), and gas-liquid mass ratio from 0.002 to 0.008. These correlations are described below. The above ranges for variables fall within the typical commercial operating conditions for many processes such as FCCU, Fluid Coking, Fluid Coking with Gasification, and others.

Kim and Marshall drop-size correlations for convergent-type pneumatic nozzles were obtained for the following ranges: drop-size, 6 to 350 $\mu$m mass medium diameter; mass flow ratio, 0.06 to 40; relative velocity 76 m/s (250 ft/sec) to sonic velocity, and viscosity 1 to 50 x $10^{-3}$ Pa.s (1 to 50 cP).

$$\overline{X}_m = 249 \frac{\sigma^{0.41} \mu_1^{0.32}}{(v_{rel}^2 \rho_a)^{0.57} A^{0.36} \rho_1^{0.16}} + 1260 \left(\frac{\mu_1^2}{\rho_1 \sigma}\right)^{0.17} \frac{1}{v_{rel}^{0.54}} \left(\frac{M_a}{M_1}\right)^m$$

where m = -1, if $M_a/M_1$ <3; m = -0.5, if $M_a/M_1$ >3.

$$\overline{X}_{\nu s} = 0.83 \, \overline{X}_m$$

where:

|  |  |
|---|---|
| $\overline{X}_m$ | = Mass medium diameter, $\mu$m |
| $\overline{X}_{\nu s}$ | = sauter mean diameter, $\mu$m |
| $\sigma$ | = Surface tension, dynes/$\mu$m |
| $\mu_1$ | = Liquid viscosity, Pa.s (cP x $10^3$) |
| $\rho_a, \rho_1$ | = Gas and liquid densities, lb/ft$^3$ |
| A | = Area, m$^2$ (ft$^2$ x 10.8) |
| $v_{rel}$ | = Gas to liquid relative velocity, m/s (ft/sec x 3.3) |
| $M_a, M_1$ | = Gas to liquid mass flowrates, kg/min (lbs/min x 2.2) |

The experimental set-up consisted of a chamber 0.9 m (3 feet) square and 1.8 m (6 feet long) equipped with light and viewing windows. The nozzle was mounted at one end of the rig and sprayed in horizontally. A screen at the far end of the rig was used to trap the spray. A liquid feed mixing tank was used to blend glycerine with water to provide the desired viscosity. Still pictures were taken to determine the spray angle and the Laser Doppler Anemometer (LDA) was used to measure drop size.

The LDA technique for sizing spherical droplets is based on the measurement of the relative phase shift that occurs when two light waves pass through the droplets on different paths. By measuring the visibility or amplitude modulation of the interference pattern formed by the scattered light and collected over a finite collecting operation, adequate information to size the droplete can be obtained.

The hardware system comprises the following pieces of equipment: transmitter, receiver, visibility processor, data management system, keyboard, Krohn-hite filter, and Anadex printer. The detailed descriptions of these components are given in "Operation Guide for Droplet Sizing Interferometer," by Spectron Development Laboratories, Inc., SDL No. 82-51025, Costa Mesa, California (1982).

The function of the transmitter is to project two coherent laser beams into a chosen test space where they may be moving droplets. The droplets scatter light from the fringe pattern caused by the crossing beams and the frequency and modulation yield the velocity and size of the measured droplets. In general, it is necessary to perfect the new alignment each time anything is changed, but these adjustments are simple. The "permanent" alignments, which require more care, need only be touched very rarely, if at all.

The transmitter contains a Spectra-Physics Model Number 107 DEM Helium Neon Laser, laser power supply, steering mirrors, a telescopic beam expander, a half wave plate, a beam steering prism, a 50% beamsplitter and interchangeable output optics.

The receiver is essentially a telescope with a photomultiplier to collect light from the focal point, at which there is an interchangeable pinhole. The positioning of the entire assembly is so as to align it approximately with the transmitted probe volume. The receiver collects light that has been scattered from anything within the illuminated sample volume and directs it on to the cathode of the photomuitiplier.

The Visibility and Doppler Signed Processor is a microprocessor which produces particle size information from optical data transmitted from the receiver.

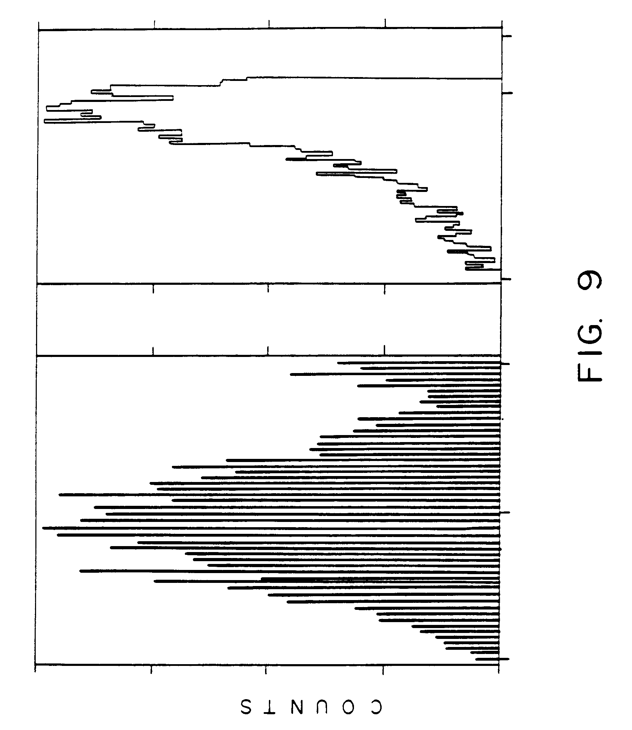

An Apple-II Plus ("Apple-II Plus is a registered Trade Mark) was used to collect and process data. FIG. 9 illustrates a typical droplet size distribution and a droplet velocity distribution. The output also includes linear mean diameter, surface mean diameter, volume mean diameter, sauter mean diameter, and droplet mean velocity.

Three different test nozzles (numbered 1, 2, and 3) were studied, wherein drop size and spray angle associated with each of the three nozzles were measured at various vapor/liquid feed rates. Sauter mean diameter of drops with nozzles nos. 1 and 2 were all greater than 1000 $\mu$m (Run 1-6 and 17-21). The drop size measurement with LDA was restricted to 1000 $\mu$m or smaller due to the narrow angle of laser beams achievable through the tank windows.

The distribution of drop sizes with nozzle no. 3 appear to be wide and bimodal. A complete first mode and part of the second mode were recorded in the sprays when the liquid flow rate was lowest at 10 gpm as in Runs 11 and 16. The base case liquid rate scaled down from a commercial FCCU is 76 $\ell$pm (20 u.s. gpm). This indicates that spray drop size can be reduced by lowering the liquid feed rate in the commercial FCCU when using a fan nozzle. Higher liquid viscosity gave larger drops as indicated by the drop size data with $1.3 \times 10^{-3}$ Pa.s (1.3 cP) (Runs 7, 8, 11) and $2.6 \times 10^{-3}$ Pa.s (2.6 cP) (Runs 12, 13, 16) liquids.

The spray dispersion angles obtained from pictures with nozzle no. 3 were in the range of 80° to 110°, while those with nozzle no. 2 were between 25° and 40°. The spray angles with both nozzles were wider with higher gas/liquid ratios.

The nozzle pressure drop, representing energy consumption, was also compared with the three nozzles. The data, shown in Table 1, indicates that $\Delta$P with the nozzle no. 3 was about 33% lower than with nozzle no. 2 at the same gas/liquid flow rates. The effect of liquid viscosity on $\Delta$P was not noticeable in the narrow viscosity range of 1.3 to $2.6 \times 10^{-3}$ Pa.s (1.3 to 2.6 cP).

Reasonably good results were obtained with the exponent m of the Kim and Marshall correlation was taken to be -0.9 to predict the Sauter Mean Diameter (SMD) of the fan nozzle spray. Such data on various flow rates, fluid properties, and nozzle designs and control responses can be used to develop correlations useful for feed injector design and control responses.

## Table 1

## FCCU Feed Nozzle Test Parameters and Test Results

| Nozzle No. | Gas Flowrate $m^3$/min (scfmx0.03) | Liquid Flowrate 1/min (U.S.gpmx3.8) | Liquid Viscosity Pa.s ($cpx10^{-3}$) | Vel. @ Throat m/s (ft/secx0.31) | Nozzle $\Delta p$ kPa (psix6.9) | Spray Angle • | Sauter Mean Diameter μm |
|---|---|---|---|---|---|---|---|
| 1 | 9.2 | 20 | 1.3 | 100 | 18 | -(4) | 1000+ |
| 1 | 9.2 | 20 | 1.3 | 100 | 18 | -(4) | 1000+ |
| 2 | 18.5 | 20 | 1.3 | 178 | 25 | -(4) | 1000+ |
| 2 | 4.6 | 20 | 1.3 | 62 | 15 | -(4) | 1000+ |
| 2 | 9.2 | 40 | 1.3 | 123 | 51 | -(4) | 1000+ |
| 2 | 9.2 | 10 | 1.3 | 89 | 7 | -(4) | 1000+ |
| 3 | 9.2 | 20 | 1.3 | 100 | 13 | -(4) | 789 |
| 3 | 18.5 | 20 | 1.3 | 178 | 18 | -(4) | 813 |
| 3 | 4.6 | 20 | 1.3 | 62 | 10 | -(4) | 1000+ |
| 3 | 9.2 | 40 | 1.3 | 123 | 36 | -(4) | 1000+ |
| 3 | 9.2 | 10 | 1.3 | 89 | 3 | -(4) | 690 |
| 3 | 9.2 | 20 | 2.6 | 100 | 12 | 80 | 835 |

EP 0 465 157 B1

| Nozzle No. | Gas Flowrate m³/min (scfmx0.03) | Liquid Flowrate l/min (G.5gpmx3.8) | Liquid Viscosity Pa.s (cpx10⁻³) | Vel. @ Throat m/s (ft/secx0.31) | Nozzle Δp kPa (psix6.9) | Spray Angle ° | Sauter Mean Diameter μm |
|---|---|---|---|---|---|---|---|
| 3 | 18.5 | 20 | 2.6 | 178 | 17 | 110 | 857 |
| 3 | 4.6 | 20 | 2.6 | 62 | 10 | 80 | 1000+ |
| 3 | 9.2 | 32 | 2.6 | 114 | 26 | -(4) | 1000+ |
| 3 | 9.2 | 10 | 2.6 | 89 | 3 | 95 | 773 |
| 2 | 9.2 | 20 | 2.6 | 100 | 18 | 35 | 1000+ |
| 2 | 18.5 | 20 | 2.6 | 178 | 25 | 40 | 1000+ |
| 2 | 4.6 | 20 | 2.6 | 62 | 15 | 35 | 1000+ |
| 2 | 9.2 | 38 | 2.6 | 121 | 49 | -(4) | 1000+ |
| 2 | 9.2 | 10 | 2.6 | 89 | 7 | 25 | 1000+ |

Example 2

This example illustrates a flow control scheme for an fluid coking with gasification process unit according to the present invention. Although the description was written for application to a particular fluid coking (with gasification) unit, application to other fluid hydrocarbon conversion and cracking units will be appreciated by those skilled in the art. The following information in Tables 2, 3, and 4 below are used in the control scheme. (Units of klb/hr, °F, psi, and psig, and their S.I. equivalents, are obtained by calculation. Instrument Tag ID numbers for a particular plant are shown.) Ten feed injectors are assumed to be in service for purposes of illustration in this example. Unit specific conditions would dictate the actual number of feed injectors in service.

Table 2

| Process Information Available from the Unit Instrumentation | |
|---|---|
| Instrument ID | Description |
| FC-F2005-IC | Reactor Injection Steam Rate |
| FC-F2004-RC | Reactor Total Feed Rate |
| FC-F2216-IC | Reactor Product (HKCO) Recycle Rate |
| FC-F2224-IC | Bottoms ("Slurry") Recycle Rate |
| FC-F2203-I | Total Fresh Feed Rate |
| FC-T2214-RC | Total Fresh Feed Temperature |
| FC-T2248-I | Total Fresh Feed Temperature |
| FC-P2099-dRC (A to J) | Feed Injector Nozzle Pressure Drop |
| FC-Z2099-I (A to J) | Feed Injector Nozzle Insert Position |
| FC-P2005-dR | Reactor Riser Differential Pressure |
| FC-P2001-R | Reactor Pressure Drop |

## Table 3

### Process Information Calculated
### by the Control Computer

| PMX Variable ID | Definition | Calculation |
|---|---|---|
| FC-X2000 | Total Recycle to Total Feed Ratio | (F2216 + F2224)/F2004 |
| FC-X2001 | "Slurry" Recycle to Total Feed Ratio | F2224/F2004 |
| FC-X2002 | HKCO Recycle to Total Feed Ratio | F2216/F2004 |
| FC-X2003 | Fresh Feed to Total Feed Ratio | F2203/F2004 |
| FC-X2004 | Total Mass Flow Rate | F2005 + F2203 + F2216 + F2224 |
| FC-X2005 | Est. Nozzle Outlet Pressure | P2005 + P2001 + 14.7 |
| FC-X2006 | Est. Nozzle Inlet Pressure | X2005 + P2099avg |
| FC-P2099avg | Average Nozzle Pressure Drop | (P2099A + P2099B + P2099C + P2099D + P2099E + P2099F + P2099G + P2099H + P2099I + P2099J)/10 |
| FC-X2007 | Nozzle Pressure Ratio | X2006/X2005 |
| FC-X2008 | Average Feed Temperature | (T2214 + T2248)/2 |
| FC-XVAPRF | Estimated Vapor Fraction | (XKFF/11.6) * (0.01 + (0.08/300) * (X2008 - 400)), a GSK-specific estimate |
| FC-X2009 | Estimated HC Vapor Rate | XVAPFR * F2203 |
| FC-X2010 | Estimated Steam Density | (((X2006 + X2005)/2) * 18)/(10.73 * (X2008 + 460)), (lb/cf $\times$ 16.08) kg/m$^3$ |

14

| | | |
|---|---|---|
| FC-X2011 | Estimated HC Vapor Density | (((X2006 + X2005)/2) * 300 * (11.6/XKFF))/(10.73 * 0.95 * (X2008 + 460)), lb/cf |
| FC-X2012 | Estimated Fresh Feed Density | 62.4 * XFFSG, lb/cf |
| FC-X2013 | Estimated HKCO Density | 62.4 * XHRSG, lb/cf |
| FC-X2014 | Estimated Bottoms Density | 62.4 * XBRSG, lb/cf |
| FC-X2015 | Steam Volume | F2005/X2010 |
| FC-X2016 | HC Vapor Volume | X2009/X2011 |
| FC-X2017 | FF Liquid Volume | (F2203-X2009)/X2012 |
| FC-2018 | HKCO Volume | F2216/X2013 |
| FC-X2019 | Bottoms Volume | F2224/X2014 |
| FC-X2020 | Total Volume | X2015 + X2016 + X2017 + X2018 + X2019 |
| FC-X2021 | Two Phase Mixture Density | (X2015/X2020) * X2010 + (X2016/X2020) * X2011 + (X2017/X2020) * X2012 +. (X2018/X2020) * X2013 + ((X2019/X2020) * X2014, lb/cf |
| FC-X2022 | Vapor Phase Density | (X2015/X2020) * X2010 + (X2016/X2020) * X2011, lb/cf |
| FC-X2023 | "y" | (X2009 + F2005)/ X2004 |
| FC-X2024 | "B" | X2023 ** -0.49 |
| FC-X2025 | Sonic Velocity | 68 * (X2024/X2021) * ((XCPCV * ((X2005 + X2006)/2) * X2022)**0.5) |

(in the above column
1 lb/cf = $16.0 \ kg/m^3$).

| | | |
|---|---|---|
| FC-X2026 | Throat Average Velocity | X2020/(3600 * XTONAREA) |

The variable XTONAREA is the total nozzle flow area, sq. ft. Individual position of the nozzle insert in each nozzle will allow the flow area in the throat to be calculated for the nozzle geometry. The total flow area available is then calculated based on the number of active nozzles in service.

The throat velocity is compared to the sonic velocity. If the throat velocity is greater than 65% of the sonic velocity, then the sonic flow pressure drop equation is used to calculate a flow coefficient ("CF"). If the throat velocity is less than 65% of sonic, the sub-sonic flow equation is used to calculate a flow coefficient. Sub-sonic "CF" is defined as follows:

$$CF = ((A_o * 2 * X2021 * X2026 * X2026)/P2099avg) ** 0.5$$

Sonic "CF" is defined as follows:

$$CF = ((B_o * 2 * X2021 * X2026 * X2025)/P2099avg) ** 0.5$$

where $A_o$ and $B_o$ are constants which must be determined empirically for each particular nozzle design.

## Table 4

### Run Plan Specific Information
### (supplied by the unit operator)

| "PMX" Variable ID | Description |
| --- | --- |
| FC-XKFF | Fresh Feed Characterization Factor |
| FC-XFFSG | Fresh Feed Specific Gravity |
| FC-XHRSG | HKCO Recycle Specific Gravity |
| FC-XBRSG | Bottoms Recycle Specific Gravity |

A flow control operating mode will now be described, using the information provided above. A total feed flow controller, designated F-2004-RC, will reset individual feed injector nozzle controllers to open or close the available flow area to allow more or less total feed to pass into the reactor. The flow coefficient parameter "CF" will be monitored in an open loop fashion to ensure that a good atomization region is being maintained. Typically the operator would manipulate the injection steam rate as a means of maintaining a target "CF". The control computer calculated value for the flow coefficient "CF" is a more direct indication of the performance of the feed injector atomization. The process feed injector pressure drop reading is a gross indication of feed injector atomization, but many process factors can and will influence this reading. By applying the sub-sonic or sonic feed injector pressure drop equations to calculate a flow coeffcient "CF", a more representative indication of feed atomization is obtained. This allows flexibility for more intelligent control decisions and hierarchy to be applied to the fluid coking with gasification process to achieve target operating objectives.

To minimize process disturbances, ten feed injector nozzles used in this example may be ramped open or closed by moving opposing pairs of nozzles as a unit. (The pairings would typically be as follows: A/F, B/G, C/H, D/I, and E/J). In the stroke range from 36% to 80% each pair of injectors would be moved a maximum of about 10% stroke at a time in response to feed rate changes. This 10% increment corresponds to about 2.7% of the total nozzle throat area being manipulated at one time. Table 5 below illustrates a typical sequential flow area change using this technique:

## Table 5

| Nozzle ID | Start Stroke, % | Start Throat Area | First Step Stroke, % | First Step Throat Area |
|---|---|---|---|---|
| A | 36 | 5.629 | 46 | 4.859 |
| F | 36 | 5.629 | 46 | 4.859 |
| B | 36 | 5.629 | 36 | 5.629 |
| G | 36 | 5.629 | 36 | 5.629 |
| C | 36 | 5.629 | 36 | 5.629 |
| H | 36 | 5.629 | 36 | 5.629 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |

Total Throat Area = 56.29                54.75

| Nozzle ID | Second Step Stroke, % | Second Step Throat Area | Third Step Stroke, % | Third Step Throat Area |
|---|---|---|---|---|
| A | 46 | 4.859 | 46 | 4.859 |
| F | 46 | 4.859 | 46 | 4.859 |
| B | 46 | 4.859 | 46 | 4.859 |
| G | 46 | 4.859 | 46 | 4.859 |
| C | 36 | 5.629 | 46 | 4.859 |
| H | 36 | 5.629 | 46 | 4.859 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |

Total Throat Area = 53.21                51.67

Table 5 above illustrates how a very precise flow area control can be maintained and manipulated to achieve the desired level of feed atomization. The above case is an illustration of a controlled ramping closed of the feed injectors, caused by either a change in total feed rate to the unit or a change in the target amount of injection steam being used. To ramp open the feed injector flow area a reverse sequence would be used.

The control computer application program could be constructed in several different forms. The total feed flow controller, F-2004-RC, could be cascaded directly to the feed injector actuators, H-2099-IC (A to J), or in a layered hierarchy with F-2004-RC cascaded to P-2099-dRC (A to J) which in turn could be cascaded to the individual feed injector actuators, H-2099-IC (A to J). Having individual actuator controllers and PdRC instrumentation on each feed injector provides flexibility for on stream maintenance and control loop tuning of the feed injector system. Lower cost configurations are possible with fewer instruments, and would represent a simplified version of the configuration detailed above.

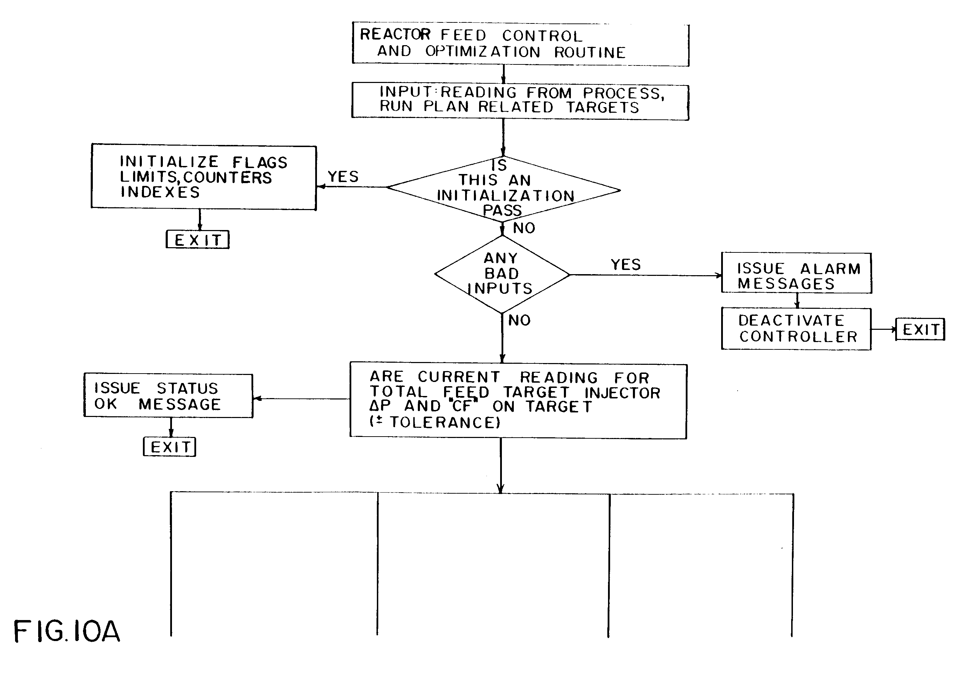

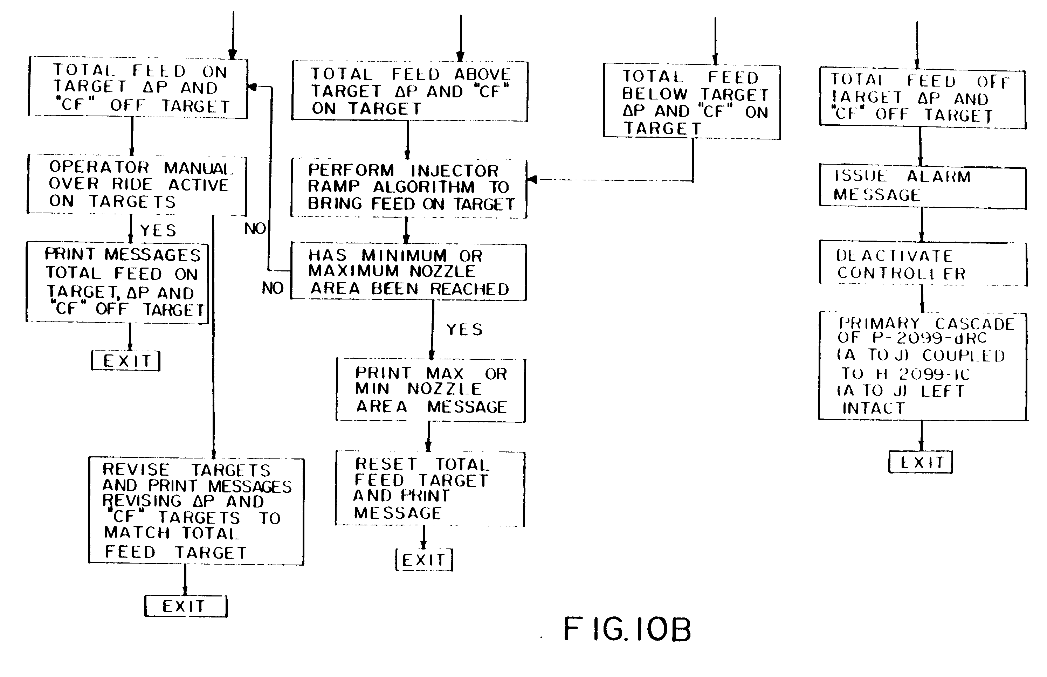

FIG. 10 (parts A and B) is a schematic illustrating the basic structure of a typical control computer application program to vary feed injector throat area based on total reactor feed processing objectives. It is based on a ten variable throat feed injector system with a PdRC controller cascaded to the injector actuator, HIC: P-2099-dRC A cascaded to H-2099-IC A, etc. Operator-supplied set points for P-2099-dRC (A to J) are based on a unit specific run plan to initialize the system. This set point is consistent with a target spray pattern. The calculated flow coefficient "CF" will be calculated in a real time frame. This "CF" will be used as an index of feed atomization.

Example 3

In the above example, a fluid coking (with gasification) process control scheme was illustrated for application to a particular unit and uses instrument tag ID numbers, etc. from the plant. This application could be applied to other fluid hydrocarbon conversion and cracking process units in a similar fashion, although unit-specific items might influence the final functional form of the application as well as location-specific cost issues associated with any revamp.

The control scheme detailed above is based on a "single stage" reactor configuration where the oil feed is introduced at a specific point along the length of the reactor. This scheme could also be applied to "multi-stage" reactor configurations where the oil feed is introduced at several points along the length of the reactor. When applied to a "multi-stage" configuration, various hybrid control configurations become possible. The matrix in Table 6 below illustrates how four distinct control schemes could optimally be applied to a two stage reactor configuration. For more than two stages, a much larger matrix is appropriate. A two stage system is viewed as a reasonable commercial configuration with three stages being a possible commercial "stretch case" depending on economics. The four distinct control schemes might typically be defined as follows: (1) total flow control, (2) reactor temperature control, (3) carbon and heat balance control, and (4) yield selectivity/quality control.

## Table 6

### Control Scheme Matrix - Two Stage Reactor Configuration
### (Tag numbers refer to the control schemes detailed above)

| Case: | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Stage A | 1 | 1 | 1 | 1 | 2 | 2 | 2 | 2 | 3 | 3 | 3 | 3 | 4 | 4 |
| Stage B | 1 | 2 | 3 | 4 | 1 | 2 | 3 | 4 | 1 | 2 | 3 | 4 | 1 | 2 |

| Case: | 15 | 16 | 17 | 18 | 19 | 20 | 21 | 22 | 23 | 24 | 25 | 26 | 27 | 28 |
|---|---|---|---|---|---|---|---|---|---|---|---|---|---|---|
| Stage A | 4 | 4 | 2 | 3 | 4 | 1 | 3 | 4 | 1 | 2 | 4 | 1 | 2 | 3 |
| Stage B | 3 | 4 | 1 | 1 | 1 | 2 | 2 | 2 | 3 | 3 | 3 | 4 | 4 | 4 |

For a multi-stage reactor configuration, a commercial installation would probably install the necessary instrumentation to provide flexibility to operate in any one of the 28 possible configurations outlined above. Various run plan-specific and economic-specific items would tend to favor certain operating cases over others, but it would be difficult to predict which of the 28 possible cases would be the most attractive under all possible operating scenarios.

18

## Claims

1. A method of controlling an apparatus for fluidized coking of a hydrocarbon and/or hydrocarbonaceous feed, the apparatus comprising a fluidized coking reaction zone and at least one feed injector for introducing feed into the reaction zone in the form of a spray of atomised droplets, and wherein the injector(s) is/are adjustable to vary the feed droplet size and/or the spray pattern of feed entering the reaction zone, the method comprising monitoring the pressure drop (dP) across at least one of said injectors (or a part thereof), deriving a signal representative of dP, and employing said signal to adjust, for at least one selected injector, a feed atomization parameter selected from dP, fluid flow-rate through the selected injector(s), fluid mass flow-rate per unit flow area in the selected injector(s) or part(s) thereof, fluid volume flow-rate per unit flow area in the selected injector(s) or part(s) thereof, vapor-phase density in the selected injector(s) or part(s) thereof, or a combination of at least two of the foregoing parameters, until the feed atomization parameter falls within a range corresponding with a desired degree of atomization of feed passing through at least the selected injector(s).

2. The process of claim 1, wherein the pressure drop dP effects the average feed droplet size, droplet size distribution, and/or spray pattern of said feed introduced into the coking zone, and wherein the atomization is controlled by varying the cross-sectional flow area across a throat section of said feed injector.

3. The process of claim 1 or claim 2 wherein said atomization is adjusted to compensate for changing upstream properties of said feed to said feed injector.

4. The process of claim 3 wherein feed flow control is cascaded to feed injector control.

5. The process of any one of claims 1 to 4 wherein said degree of atomization is determined by a preselected set point, which is optimized for a given yield and/or selectivity objective.

6. The process of claim 5 wherein said preselected set point is optimized for a given feed material and one of its physical properties and wherein said atomization is varied in real time.

7. The process of claim 5 or claim 6 wherein the set point for the pressure controller is selected based on field calibration curves constructed for each feed injector to define the relationship between nozzle pressure change and position of a means for varying the cross-sectional flow area of a throat section of said feed injector.

8. The process of claim 7 wherein the field calibration data is incorporated into an application program that will send a signal to an actuator for changing the position of a nozzle throat insert based on a pressure control signal.

9. Apparatus for the fluidized coking of a hydrocarbon and/or hydrocarbonaceous feed, comprising a fluidized coking reactor, one or more feed injectors connected to a wall of the coking reactor, at least one of which feed injectors is capable of adjusting the atomization of the feed while installed in the coking reactor wall, and further comprising means for monitoring the pressure drop (dP) across at least one of the injectors (or a part thereof), means operable to derive a signal representative of dP, and controller means responsive to said signal to adjust, for at least one selected injector, a feed atomization parameter selected from dP, fluid flow-rate through the selected injector(s), fluid mass flow-rate per unit flow area in the selected injector(s) or part(s) thereof, fluid volume flow-rate per unit flow area in the selected injector(s) or part(s) thereof, vapor-phase density in the selected injector(s) or part(s) thereof, or a combination of at least two of the foregoing parameters, to provide a feed atomization parameter within a range corresponding with a desired degree of atomization of feed passing through at least the selected injector(s).

10. Apparatus as claimed in claim 9, comprising a means for comparing said signal based on dP to another signal based on a preselected set point value and adjusting said atomization so as to diminish any difference between said first and second signals.

**Patentansprüche**

1. Verfahren zur Steuerung einer Vorrichtung zum Wirbelschicht-Verkoken eines Kohlenwasserstoff- und/oder kohlenwasserstoffhaltigen oder kohlenwasserstoffartigen Einsatzmaterials, bei dem die Vorrichtung eine Wirbelschicht-Verkokungsreaktionszone und mindestens einen Einsatzmaterial-Injektor zum Einbringen von Einsatzmaterial in die Reaktionszone in Form eines Sprühnebels zerstäubter Tröpfchen umfaßt, der Injektor bzw. die Injektoren einstellbar ist bzw. sind, um die Tröpfchengröße des Einsatzmaterials und/oder das Sprühmuster des in die Reaktionszone eintretenden Einsatzmaterials zu variieren, der Druckverlust (dP) über mindestens einem der Injektoren (oder einem Teil davon) überwacht wird, ein für dP repräsentatives Signal abgeleitet wird und das Signal verwendet wird, um für mindestens einen gewählten Injektor einen Einsatzmaterialzerstäubungsparameter ausgewählt aus dP, der Fluidströmungsgeschwindigkeit durch den gewählten Injektor bzw. die gewählten Injektoren, der Fluidmassenströmungsgeschwindigkeit pro Strömungsflächeneinheit in dem gewählten Injektor bzw. den gewählten Injektoren oder dem Teil oder den Teilen davon, der Fluidvolumenströmungsgeschwindigkeit pro Strömungsflächeneinheit in dem gewählten Injektor bzw. den gewählten Injektoren oder dem Teil oder den Teilen davon, der Dampfphasendichte in dem gewählten Injektor bzw. den gewählten Injektoren oder einem Teil oder Teilen davon oder einer Kombination aus mindestens zwei der vorhergehenden Parameter einzustellen, bis der Einsatzmaterialzerstäubungsparameter in einen Bereich fällt, der einem gewünschten Zerstäubungsgrad des Einsatzmaterials entspricht, das durch mindestens den gewählten Injektor bzw. die gewählten Injektoren geleitet wird.

2. Verfahren nach Anspruch 1, bei dem der Druckverlust dP die mittlere Tröpfchengröße des in die Verkokungszone eingebrachten Einsatzmaterials, die Verteilung der Tröpfchengröße und/oder das Sprühmuster des Einsatzmaterials beeinflußt, und bei dem die Zerstäubung gesteuert wird, indem die Querschnittströmungsfläche über einen Verengungsabschnitt des Einsatzmaterial-Injektors variiert wird.

3. Verfahren nach Anspruch 1 oder Anspruch 2, bei dem die Zerstäubung eingestellt wird, um die stromaufwärts stattfindende Veränderung der Eigenschaften des zu dem Einsatzmaterial-Injektor geleiteten Einsatzmaterials zu kompensieren.

4. Verfahren nach Anspruch 3, bei dem die Einsatzmaterialströmungssteuerung über eine Kaskade an die Einsatzmaterial-Injektorsteuerung weitergegeben wird.

5. Verfahren nach einem der Ansprüche 1 bis 4, bei dem der Zerstäubungsgrad durch einen vorgewählten Einstellungspunkt bestimmt wird, der für ein gegebenes Ausbeute- und/oder Selektivitätsziel optimiert ist.

6. Verfahren nach Anspruch 5, bei dem der vorgewählte Einstellungspunkt für ein gegebenes Einsatzmaterial und eine seiner physikalischen Eigenschaften optimiert ist und die Zerstäubung in Echtzeit variiert wird.

7. Verfahren nach Anspruch 5 oder Anspruch 6, bei dem der Einstellungspunkt für den Druckregler aufgrund von Feldkalibrierkurven ausgewählt ist, die für jeden Einsatzmaterial-Injektor erzeugt worden sind, um die Beziehung zwischen Düsendruckveränderung und der Position einer Einrichtung zum Variieren des Stromungsflächenquerschnitts eines Verengungsabschnitts dieses Einsatzmaterial-Injektors festzulegen.

8. Verfahren nach Anspruch 7, bei dem die Feldkalibrierwerte in ein Anwendungsprogramm eingebaut werden, das ein Signal an ein Stellglied schickt, um auf der Grundlage eines Drucksteuerungssignals die Position eines Verengungseinsatzes einer Düse zu verändern.

9. Vorrichtung zum Wirbelschicht-Verkoken eines Kohlenwasserstoff- und/oder kohlenwasserstoffartigen oder kohlenwasserstoffhaltigen Einsatzmaterials, die einen Wirbelschicht-Kokerreaktor, einen oder mehrere Einsatzmaterial-Injektoren, die mit einer Wand des Kokerreaktors verbunden sind, wobei mindestens einer der Einsatzmaterial-Injektoren in der Lage ist, die Zerstäubung des Einsatzmaterials einzustellen, während er in der Wand des Kokerreaktors eingebaut ist, und außerdem Einrichtungen zum Überwachen des Druckverlustes (dP) über mindestens einen der Injektoren (oder einen Teil davon), Einrichtungen, die in der Lage sind, ein für dP repräsentatives Signal abzuleiten, und Steuereinrichtungen umfaßt, die auf das Signal ansprechen, um für mindestens einen gewählten Injektor einen Einsatzmaterialzerstäubungsparameter ausgewählt aus dP, der Fluidströmungsgeschwindigkeit durch den gewählten Injektor bzw. die gewählten Injektoren, der Fluidmassenströmungsgeschwindigkeit pro Strömungsflächeneinheit in dem gewählten Injektor bzw. den gewählten Injektoren oder dem Teil oder den Teilen davon, der Fluidvolumenströmungsgeschwindigkeit pro Strömungsflächeneinheit in dem gewählten Injektor bzw. den gewählten Injektoren oder dem Teil oder den Teilen davon, der Dampfphasendichte in dem gewählten Injektor bzw. den gewählten Injektoren oder einem Teil oder Teilen davon oder einer Kombination aus mindestens zwei der vorhergehenden Parameter einzustellen, um für einen Einsatzmaterialzerstäubungsparameter in einem Bereich zu sorgen, der einem gewünschten Zerstäubungsgrad des Einsatzmaterials entspricht, das durch mindestens den gewählten Injektor bzw. die gewählten Injektoren geleitet wird.

10. Vorrichtung nach Anspruch 9, die ein Mittel umfaßt, um das auf dP basierende Signal mit einem anderen Signal zu vergleichen, welches auf einem vorgewählten Einstellungswert basiert, und die Zerstäubung so einzustellen, daß jeglicher Unterschied zwischen dem ersten und dem zweiten Signal vermindert wird.

**Revendications**

1. Procédé de contrôle d'un appareil de cokéfaction fluidisée d'une charge d'alimentation en hydrocarbures et/ou d'une charge d'alimentation hydrocarbonée, ledit appareil comprenant une zone réactionnelle de cokéfaction fluidisée et au moins un injecteur d'alimentation pour introduire une alimentation dans la zone réactionnelle sous la forme d'une pulvérisation de gouttelettes atomisées, et dans lequel le ou les injecteurs est/sont ajustable(s) pour faire varier le calibre des gouttelettes et/ou le schéma de pulvérisation de l'alimentation pénétrant dans la zone réactionnelle, le procédé consistant à surveiller la chute de pression (dP) à travers au moins un desdits injecteurs (ou une partie d'entre eux), à en déduire un signal représentatif de dP et à utiliser ledit signal pour ajuster, pour au moins un injecteur sélectionné, un paramètre d'atomisation de l'alimentation choisi parmi dP, le débit de fluide à travers le ou les injecteurs sélectionnés, le débit massique de fluide par unité de surface d'écoulement dans le ou les injecteurs sélectionnés ou une ou des parties de ceux-ci, le débit volumique de fluide par unité de surface d'écoulement dans le ou les injecteurs sélectionnés ou une ou des parties de ceux-ci, la densité en phase vapeur dans le ou les injecteurs sélectionnés ou une ou des parties de ceux-ci, ou une combinaison d'au moins deux des paramètres précités jusqu'à ce que le paramètre d'atomisation de l'alimentation tombe dans une plage correspondant à un degré souhaité d'atomisation de l'alimentation passant par au moins le ou les injecteurs sélectionné(s).

2. Procédé selon la revendication 1, dans lequel la chute de pression dP affecte le calibre moyen des gouttelettes, la distribution des calibres des gouttelettes et/ou le schéma de pulvérisation de ladite charge d'alimentation introduite dans la zone de cokéfaction, et dans lequel l'atomisation est contrôlée en faisant varier la surface d'écoulement en coupe transversale en travers d'une section de gorge dudit injecteur d'alimentation.

3. Procédé selon la revendication 1 ou 2, dans lequel ladite atomisation est ajustée pour compenser le changement des propriétés en amont de ladite alimentation dudit injecteur d'alimentation.

4. Procédé selon la revendication 3, dans lequel le contrôle d'écoulement de l'alimentation est connecté en cascade avec le contrôle des injecteurs d'alimentation.

5. Procédé selon l'une quelconque des revendications 1 à 4, dans lequel ledit degré d'atomisation est déterminé par un point de consigne présélectionné, qui est optimisé pour un objectif donné de rendement et/ou de sélectivité.

6. Procédé selon la revendication 5, dans lequel ledit point de consigne présélectionné est optimisé pour une matière d'alimentation donnée et une de ses propriétés physiques et dans lequel ladite atomisation est modifiée en temps réel.

7. Procédé selon la revendications 5 ou 6, dans lequel le point de consigne pour le contrôleur de pression est sélectionné sur base de courbes d'étalonnage sur site établies pour chaque injecteur d'alimentation

EP 0 465 157 B1

afin de définir la relation entre le changement de pression des buses et la position d'un moyen pour faire varier la surface d'écoulement en coupe transversale d'une section de gorge dudit injecteur d'alimentation.

8.  Procédé selon la revendication 7, dans lequel les données d'étalonnage sur site sont incorporées à un programme d'application qui enverra un signal à un dispositif de commande pour changer la position d'un élément rapporté dans la gorge de la buse sur base d'un signal de contrôle de pression.

9.  Appareil de cokéfaction fluidisée d'une charge d'alimentation en hydrocarbures et/ou d'une charge d'alimentation hydrocarbonée, comprenant une zone réactionnelle de cokéfaction fluidisée, un ou plusieurs injecteurs d'alimentation connectés à une paroi du réacteur de cokéfaction, un au moins desdits injecteurs d'alimentation étant à même d'ajuster l'atomisation de l'alimentation lorsqu'il est installé dans la paroi du réacteur de cokéfaction, et comprenant par ailleurs des moyens pour surveiller la chute de pression (dP) à travers au moins un des injecteurs (ou une partie de ceux-ci), des moyens susceptibles de déduire un signal représentatif de dP, et des moyens de commande sensibles audit signal pour ajuster, pour au moins un injecteur sélectionné, un paramètre d'atomisation de l'alimentation choisi parmi dP, le débit de fluide à travers le ou les injecteurs sélectionnés, le débit massique de fluide par unité de surface d'écoulement dans le ou les injecteurs sélectionnés ou une ou des parties de ceux-ci, le débit volumique de fluide par unité de surface d'écoulement dans le ou les injecteurs sélectionnés ou une ou des parties de ceux-ci, la densité en phase vapeur dans le ou les injecteurs sélectionnés ou une ou des parties de ceux-ci, ou une combinaison d'au moins deux des paramètres précités, pour obtenir un paramètre d'atomisation de l'alimentation tombant dans une plage correspondant à un degré souhaité d'atomisation de l'alimentation passant par au moins le ou les injecteurs sélectionné(s).

10.  Appareil selon la revendication 9, comprenant un moyen pour comparer ledit signal basé sur dP à un autre signal basé sur une valeur de consigne présélectionnée et pour ajuster ladite atomisation de manière à diminuer toute différence entre lesdits premier et deuxième signaux.

22

PRIOR ART

FIG. 1

FIG. 2A

FIG. 2B

FIG. 3

FIG. 4

FIG. 5

FIG. 6

FIG. 7

FIG. 8

FIG. 9

EP 0 465 157 B1

FIG. IOA

EP 0 465 157 B1

TOTAL FEED ON TARGET ΔP AND "CF" OFF TARGET

TOTAL FEED ABOVE TARGET ΔP AND "CF" ON TARGET

TOTAL FEED BELOW TARGET ΔP AND "CF" ON TARGET

TOTAL FEED OFF TARGET ΔP AND "CF" OFF TARGET

OPERATOR MANUAL OVER RIDE ACTIVE ON TARGETS

PERFORM INJECTOR RAMP ALGORITHM TO BRING FEED ON TARGET

ISSUE ALARM MESSAGE

YES

NO

PRINT MESSAGES TOTAL FEED ON TARGET, ΔP AND "CF" OFF TARGET

HAS MINIMUM OR MAXIMUM NOZZLE AREA BEEN REACHED

NO

DEACTIVATE CONTROLLER

EXIT

YES

PRIMARY CASCADE OF P-2099-dRC (A TO J) COUPLED TO H-2099-IC (A TO J) LEFT INTACT

PRINT MAX OR MIN NOZZLE AREA MESSAGE

REVISE TARGETS AND PRINT MESSAGES REVISING ΔP AND "CF" TARGETS TO MATCH TOTAL FEED TARGET

RESET TOTAL FEED TARGET AND PRINT MESSAGE

EXIT

EXIT

EXIT

FIG.10B